# EUROPÄISCHE PATENTANMELDUNG

(11) **EP 1 795 817 A2**
(43) Veröffentlichungstag der Anmeldung: **13.06.2007**
(21) Anmeldenummer: 06018416.5
(22) Anmeldetag: 02.09.2006
(51) Int. Cl.: F24D 12/02, F24D 3/08, F24D 3/02

(54) **Einrichtung zur Wärmeversorgung mit mindestens zwei getrennten, auf unterschiedlichen Temperaturebenen liegenden Verbraucherkreisen mit mindestens einem Wärmeerzeuger und Verfahren zum Betreiben der Einrichtung**

(30) Priorität: 26.09.2005 DE 102005046080
(71) Anmelder: Vertrieb und Grosshandel von Heizungs-, Sanitär- und Elektroerzeugnissen, 13055 Berlin (DE)
(72) Erfinder: Schramm, Bruno, 15537 Grünheide (DE); Lang, Jürgen, 12557 Berlin (DE)
(74) Vertreter: Burghardt, Dieter

(57) **Zusammenfassung**

Einrichtung zur Wärmeversorgung mit mindestens zwei getrennten, auf unterschiedlichen Temperaturebenen liegenden Verbraucherkreisen mit mindestens einem Wärmeerzeuger und Verfahren zum Betreiben der Einrichtung.

Die Erfindungsaufgabe, eine mit mindestens zwei vorwiegend im Brennwertbereich arbeitenden Brennwertkesseln ausgestattete Einrichtung zur Wärmeversorgung von mindestens zwei auf unterschiedlichen Temperaturebenen liegenden Verbraucherkreisen für die Wärmeenergiebereitstellung für eine Heizungsanlage und für die Versorgung einer Einrichtung zur Warmwassererzeugung aus Trinkwasser und ein Verfahren zum wirtschaftlichen Betreiben von mindestens mit zwei im Brennwertbereich arbeitenden Wärmeerzeugern ausgestatteten Einrichtung zur Wärmeversorgung sowohl im Winter- und Sommerbetrieb als auch im stark schwankenden Energiebedarfsfall zu entwickeln, wurde dadurch gelöst, daß die Verbraucherkreise (1; 2) hydraulisch von einander getrennt und über einen Wärmetauscher (21) thermisch miteinander verbunden sind und jeder Verbraucherkreis (1; 2) mit mindestens einem Wärmeerzeuger (3; 4; 16) versehen ist.

## Beschreibung

Die Erfindung betrifft eine mit mehreren Wärmeerzeugern ausgerüstete Einrichtung zur Wärmeversorgung durch Wärmeenergiebereitstellung für mindestens zwei auf unterschiedlichem Temperaturniveau liegende Versorgungskreise beispielsweise für Heizung und für Warmwassererzeugung aus Trinkwasser und ein Verfahren zum verbrauchsabhängigen und wirtschaftlichen Betreiben von mehreren Wärmeerzeugern in einer Einrichtung zur Wärmeversorgung.

Es sind Wärmeversorgungsanlagen zur Wärmeenergiebereitstellung für eine nachgeordnete Heizungsanlage und für eine Einrichtung zur Warmwassererzeugung aus Trinkwasser bekannt, bei denen mindestens zwei im Parallelbetrieb angeordnete Wärmeerzeuger eingesetzt sind. Die parallel liegenden Wärmeerzeuger sind im Vorlauf mit einem Heizkreisverteiler verbunden, von dem aus jeweils die Verbraucher gespeist werden, und die Rücklaufleitungen der Verbraucher sind mit einem Rücklaufsammler verbunden, der mit den Rücklaufleitungen zu den parallel angeordneten Wärmeerzeugern in Verbindung steht. Zur Einstellung der erforderlichen Vorlauftemperatur ist jeder der Wärmeerzeuger mit einer von der Außentemperatur gesteuerten Reglereinheit ausgerüstet.

Weiterhin sind Wärmeversorgungsanlagen zur Wärmeenergiebereitstellung für eine nachgeordnete Heizungsanlage und für eine Einrichtung zur Warmwassererzeugung aus Trinkwasser bekannt, die mit zwei in Reihe geschalteten Wärmeerzeugern, bestehend aus einem Brennwertkessel und einem Niedertemperatur-Heizkessel, ausgerüstet sind. Diese Kesselfolgeschaltung ist last- und zeitabhängig geregelt. Wird der Sollwert der Vorlauftemperatur unterschritten, wird der als Führungskessel vorgesehene Brennwertkessel in Betrieb genommen. Solange der Folgekessel außer Betrieb ist, ist dieser durch ein motorbetätigtes Absperrorgan hydraulisch von der Anlage getrennt. Bei entsprechendem Wärmebedarf wird mit Zuschaltung des Folgekessels das motorbetätigte Absperrorgan automatisch geöffnet. Bei abnehmender Belastung laufen die Schaltvorgänge sinngemäß umgekehrt ab. Die in Reihe liegenden Wärmeerzeuger sind im Vorlauf mit einem Heizkreisverteiler verbunden, von dem aus jeweils die Verbraucher gespeist werden; und die Rücklaufleitungen der Verbraucher sind mit einem Rücklaufsammler verbunden, der mit den Rücklaufleitungen zu den in Reihe angeordneten Wärmeerzeugern in Verbindung steht.

Der Bestimmung der erforderlichen Vorlauftemperatur liegen theoretisch ermittelte Heizungskurven zugrunde, die nicht dem wirklichen Wärmeenergiebedarf der Verbraucher entsprechen. Obgleich die Wärmeerzeuger für sich einen hohen technischen Standard hinsichtlich des Wirkungsgrades aufweisen, werden diese Vorteile bei parallel betriebenen Wärmeerzeugern in nachgeschalteten Anlagen für Heizung und Trinkwassererwärmung nicht genutzt. Ursache hierfür ist einerseits, daß die Wärmeerzeuger getrennt, d.h. unabhängig von dem wirklichen Energiebedarf der Verbraucher geregelt werden. Weiterhin lassen sich die im Parallelbetrieb arbeitenden oder in Reihe geschalteten Wärmeerzeuger nicht im optimalen Auslegungsbereich betreiben, da die Rücklauftemperatur zum als Führungskessel ausgebildeten Brennwertkessel nicht kontrolliert soweit abgesenkt wird, daß die Vorteile des Brennwertkessels genutzt werden können.

Es wurde bereits in der DE 103 49 258.5-16 eine Wärmeversorgungsanlage mit mindestens zwei Wärmeerzeugern für eine Heizungsanlage und für eine Einrichtung zur Warmwassererzeugung und ein Verfahren zur verbrauchsabhängigen Steuerung der Wärmeerzeuger vorgeschlagen, die aus zwei in Reihe liegenden Wärmeerzeugern besteht, von denen ein vorgeschalteter Wärmeerzeuger als Grundlastträger und ein dem erstgenannten Wärmeerzeuger nachgeordneter Wärmeerzeuger als der Aufladung einer Wärmespeichereinrichtung in einer Einrichtung zur Warmwassererzeugung dienender Ergänzungslastträger ausgebildet ist und für die zwei in Reihe liegenden Wärmeerzeuger ein gemeinsamer Heizungsrücklauf aus einem Heizkreis und aus einem Entladekreis eines in der Einrichtung zur Warmwassererzeugung angeordneten Wärmeaustauschers und eine der Anhebung der Vorlauftemperatur dienende Vorlaufeinspeisung aus dem nachgeordneten Wärmeerzeuger in den Vorlauf des Heizkreises und die Wärmespeichereinrichtung -bestehend aus mindestens einem Wärmespeicher- vorgesehen sind, wobei die Wärmespeichereinrichtung mit einer Vorlaufleitung des nachgeordneten Wärmeerzeugers und rücklaufseitig mit dem gemeinsamen Rücklauf aus Heizung und Warmwassererzeuger zum vorgeschalteten Wärmeerzeuger verbunden ist.

Hiernach sind die Wärmeerzeuger vorteilhaft so in Reihe geschaltet, daß sich mindestens zwei unabhängige Verbraucherkreise mit unterschiedlichen Temperaturebenen bilden.

Nachteilig in dieser Lösung ist, daß der zweite (Folge-) Kessel vorwiegend im Niedertemperaturbereich (NT-Bereich) arbeitet und dem zufolge der Nutzungsgrad der gesamten Anlage nicht optimal ist.

Nach der DE 27 21 301 ist eine Heizungsanlage für Gebäude mit einer Zweitfeuerstelle bekannt. Hiernach wird durch eine Zweitfeuerstelle die Rücklauftemperatur in der Rücklaufleitung zum Basiswärmeerzeuger angehoben, um den Basiswärmeerzeuger lastsenkend zu betreiben. Nachteilig ist hierbei, daß der Brennwertkessel als ein effektiv arbeitender Hauptkessel nicht einsetzbar ist.

Weiterhin sind z. B. nach der DE 196 48 652 A1 Wärmeversorgungsanlagen mit mehreren parallel oder in Reihe liegenden Wärmeerzeugern mit mehreren nachgeschalteten Verbraucherkreisen mit einer hydraulischen Anlage bekannt. Da es schwierig ist, eine solche Wärmeversorgungsanlage effektiv zu betreiben, ist versucht worden, mittels einer sogenannten hydraulischen Weiche die hydraulischen Probleme zu lösen. Diese Möglichkeit hat sich in der Praxis als ein untaugliches Mittel dargestellt.

Ziel der Erfindung ist die Senkung der Energiekosten beim Betreiben einer mit mindestens zwei Brennwertkesseln ausgerüsteten Wärmeversorgungsanlage für auf unterschiedlichen Temperaturebenen arbeitende Verbraucher, d.h. sowohl für die Wärmeenergiebereitstellung für eine nachgeordnete Heizungsanlage als auch für die Versorgung einer nachgeordneten Einrichtung zur Warmwassererzeugung aus Trinkwasser und damit gleichzeitig die Erhöhung des Jahresnutzungsgrades der eingesetzten Wärmeerzeuger.

Der Erfindung liegt die Aufgabe zugrunde, eine mit mindestens zwei vorwiegend im Brennwertbereich arbeitenden Brennwertkesseln ausgestattete Einrichtung zur Wärmeversorgung von mindestens zwei auf unterschiedlichen Temperaturebenen liegenden Verbraucherkreisen für die Wärmeenergiebereitstellung für eine Heizungsanlage und für die Versorgung einer Einrichtung zur Warmwassererzeugung aus Trinkwasser und ein Verfahren zum wirtschaftlichen Betreiben von mindestens mit zwei im Brennwertbereich arbeitenden Wärmeerzeugern ausgestatteten Einrichtung zur Wärmeversorgung sowohl im Winter- und Sommerbetrieb als auch im stark schwankenden Energiebedarfsfall zu entwickeln.

Die Erfindung soll nachfolgend an einem Ausführungsbeispiel näher erläutert werden. Die zugehörigen Zeichnungen zeigen:

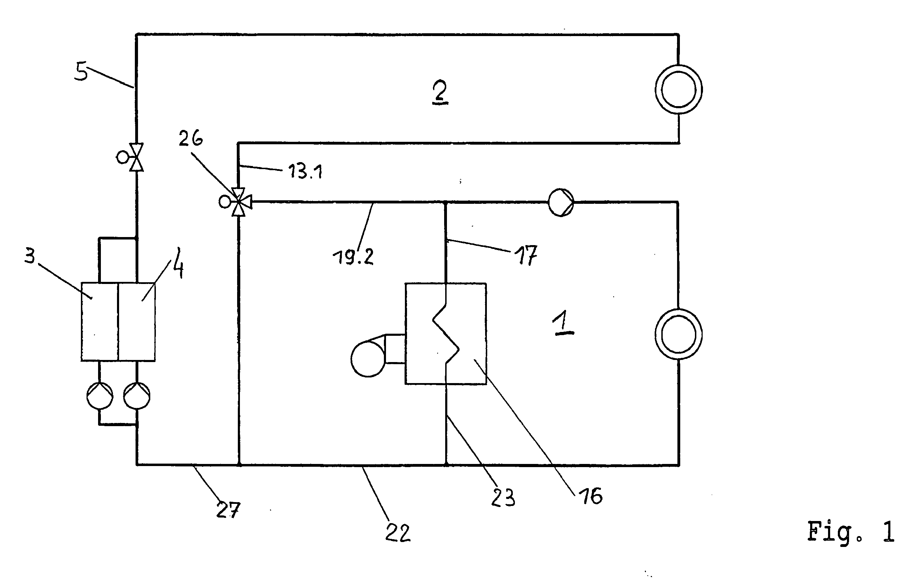

- Fig. 1: eine mit mehreren Brennwertkesseln ausgerüstete Einrichtung zur Wärmeversorgung für zwei auf unterschiedlichen Temperaturebenen liegende Verbraucherkreisen,

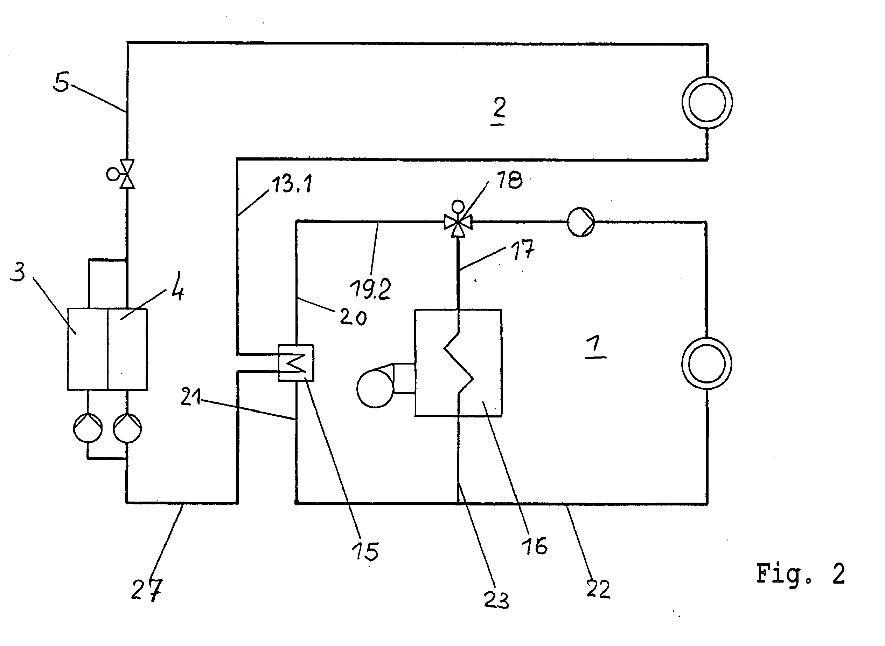

- Fig. 2: eine mit mehreren Brennwertkesseln ausgerüstete Einrichtung zur Wärmeversorgung für zwei auf unterschiedlichen Temperaturebenen liegende getrennte und über einen Wärmeübertrager gekoppelte Verbraucherkreisläufe,
- Fig. 3: eine mit mehreren Brennwertkesseln ausgerüstete Einrichtung zur Wärmeversorgung mit einem auf einem Niedrigtemperaturniveau liegende Verbraucherkreis für Heizung und mit einem auf einem höheren Temperaturniveau liegenden Verbraucherkreis für die Warmwasserversorgung aus Trinkwasser, wobei eine Rücklaufteileinspeisung zum Brennwertkessel im Heizungskreis auf einer angehobenen Temperaturebene erfolgt,

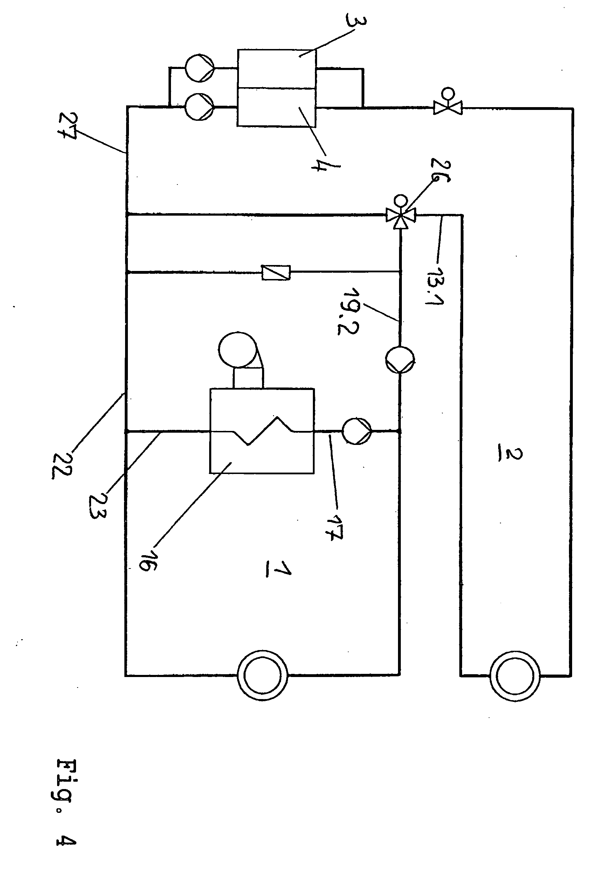

- Fig. 4: eine weitere Schaltungsvariante nach Fig. 1,

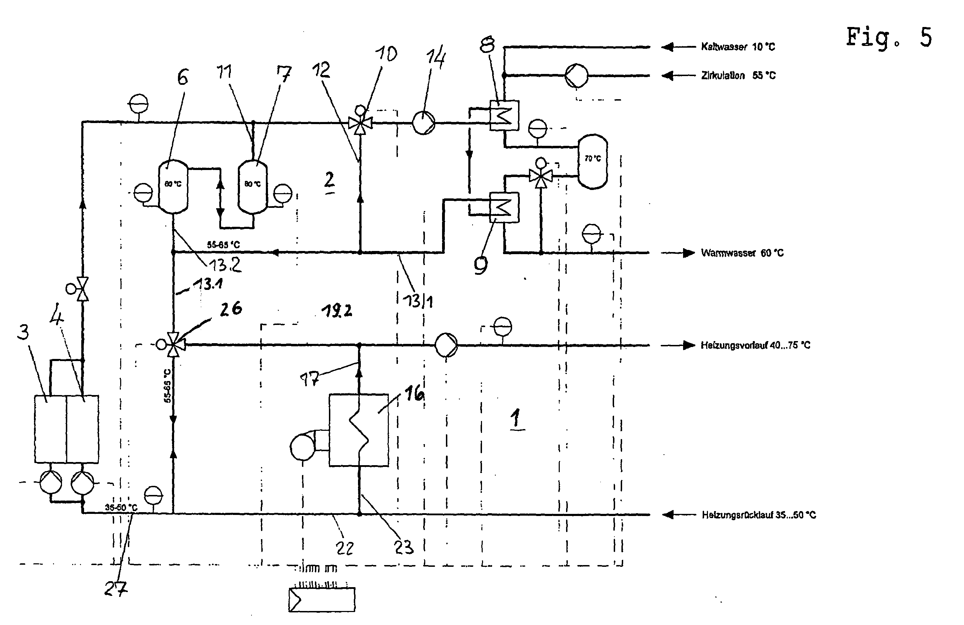

- Fig. 5: Einrichtung nach Fig. 2 in einer praktischen Ausführung,
- Fig. 6: Einrichtung nach Fig. 1 in einer praktischen Ausführung.

Eine erfindungsgemäß ausgestaltete Wärmeversorgungsanlage weist zwei Verbraucherkreise auf. Der eine Verbraucherkreis 1 dient zur Bereitstellung von Wärmeenergie für eine nicht dargestellte Beheizungsanlage. Der zweite vorhandene Verbraucherkreis 2 dient zur Bereitstellung von Wärmeenergie zur Warmwasserbereitung zur Bereitstellung von Warmwasser in einen nicht dargestellten Abnehmersystem. In dem Verbraucherkreis 2 für die Warmwasserbereitstellung befinden sich zwei als Brennwertthermen 3 und 4 ausgebildete Wärmeerzeuger. Die beiden Brennwertthermen 3 und 4 sind hydraulisch parallel geschaltet und liegen in einem Vorlauf 5 des Verbraucherkreises 2. Über die Vorlaufleitung 5 werden in Reihe liegende Wärmespeicher 6 und 7 und wahlweise ein erster der Warmwassererzeugung dienender Wärmetauscher 8 und ein mit diesem Wärmetauscher 8 in Reihe liegender, gleichfalls der Warmwasseraufbereitung dienender Wärmetauscher 9 vorlaufseitig beaufschlagt. In der Vorlaufleitung 5 ist ein temperaturgesteuertes Dreiwegeventil 10 vorgesehen, das hinter einer Einspeiseleitung 11 zum Wärmespeicher 7 angeordnet ist, das sowohl den Volumenstrom zum ersten Wärmetauscher 8 regulieren kann und andererseits einen Bypass 12 zur Rücklaufleitung 13 beaufschlagen kann. Die Rücklaufleitung 13 ist rücklaufseitig mit dem Wärmespeicher 6 verbunden.

In der Vorlaufleitung 5 ist eine Förderpumpe 14 vorgesehen, die vorteilhafter Weise zwischen dem Dreiwegeventil 10 und dem ersten Wärmetauscher 8 angeordnet ist.

In der Rücklaufleitung 13 ist ein Wärmetauscher 15 vorgesehen, der sich nach der Einbindung der Speicherrücklaufleitung 13.2 in die Rücklaufleitung 13.1 und vor dem Eintritt in die Brennwerttherme 4 befindet.

Über diesen Wärmetauscher 15 erfolgt ein Wärmeenergieaustausch zwischen dem Verbraucherkreis 1 und dem Verbraucherkreis 2.

In dem Verbraucherkreis 2 befindet sich zur Breitstellung von Heizleistung für die nicht dargestellte Heizungsanlage ein aus einem Brennwertkessel größerer Leistung bestehender Wärmeerzeuger 16. Dieser Brennwertkessel 16 ist mit seinem Vorlauf 17 über ein Dreiwegeventil 18 sowohl mit einer Vorlaufleitung 19.1 einer nicht dargestellten Heizungsanlage als auch mit einer Einspeiseleitung 19.2 zum Wärmetauschervorlauf 20 des Wärmetauschers 15 verbunden. Der Wärmetauscherrücklauf 21 ist mit einer Rücklaufleitung 22.1 mit dem Kesselrücklauf 23 wie auch mit der Rücklaufleitung 24 aus dem Verbraucherkreis 1 der Beheizungsanlage verbunden. Vor der Einspeisung der Rücklaufleitung 24 des Verbraucherkreises 1 der nicht dargestellten Heizungseinrichtung in den Kesselvorlauf 17 des Brennwertkessels 16 ist eine Förderpumpe 25 vorgesehen.

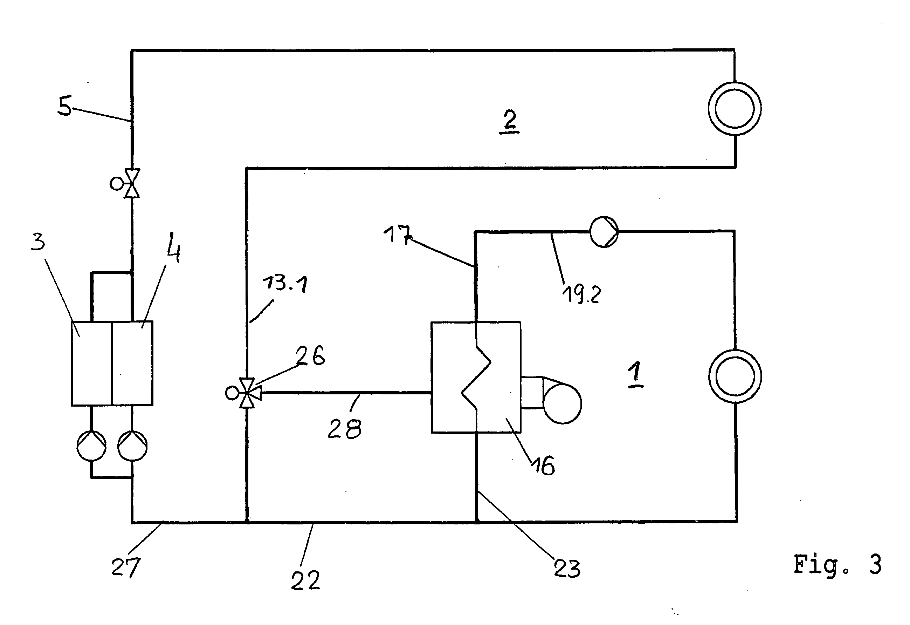

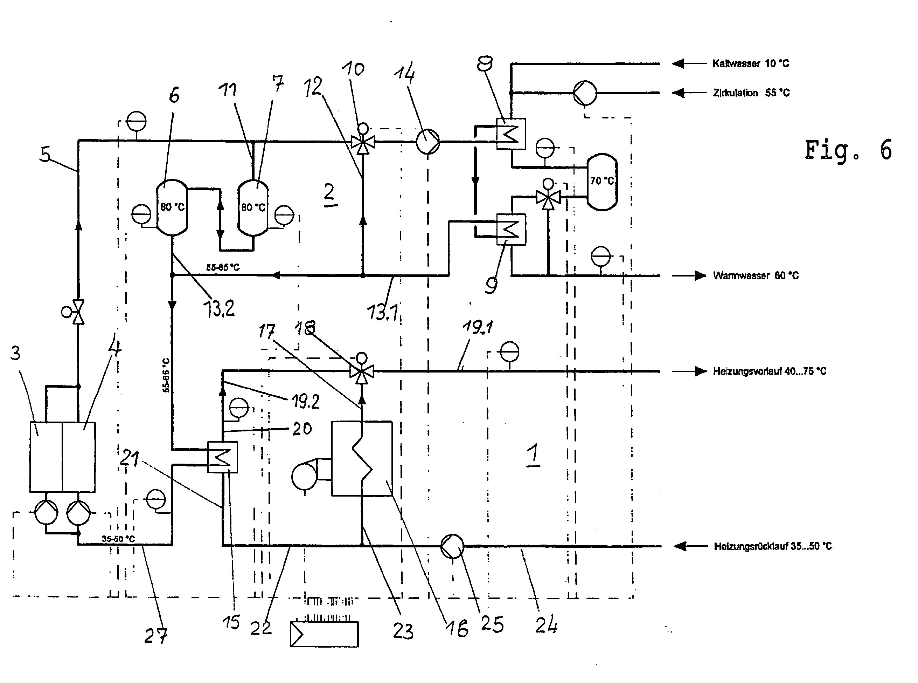

Eine Alternative zur Ausführungsform nach Fig. 6 zeigt die in Fig. 3 dargestellte, durch das Stellventil 26 mit Umschaltfunktion vollziehbare wahlweise Zuführung aus dem Rücklauf 13.1 des Verbraucherkreises 2 mit dem gegenüber dem Verbraucherkreis 1 angehobenen Temperaturniveau in die gegenüber dem Rücklauf 22 des Wärmeerzeugers 16 angehobene Rücklauftemperaturebene liegende Rücklaufkesseleinspeisung 28 des Wärmeerzeugers 16. Mit dieser Lösungsvariante soll im Betrieb eine wirtschaftliche Verbindung der zwei auf unterschiedlichen Temperaturebenen liegenden Verbraucherkreise 1; 2 unterstützt werden.

Nach einer weiteren praktischen Ausführungsform des erfinderischen Grundgedankens nach Fig. 6 sind die Versorgungskreise 1 und 2 nicht über einen Wärmetauscher 15 hydraulisch getrennt, sondern der Rücklauf 13.1 des Versorgungskreises 2 mit einem gegenüber dem Versorgungskreis 1 höheren Temperaturniveaus ist über ein Stellventil 26 mit Umschaltfunktion mit der Einspeiseleitung 19.2 zur Vorlaufleitung 19.1 des Verbraucherkreises 1 verbunden. Weiterhin ist der Rücklauf 13.1 aus dem Verbraucherkreis 2 über das Stellventil 26 mit Umschaltfunktion sowohl mit der Rücklaufeinspeisung 27 zu den Brennwertthermen 3; 4 als auch mit dem Rücklauf 22.1 des Versorgungskreises 1 verbunden. Über das Stellventil 26 mit Umschaltfunktion wird bewirkt, daß der Verbraucherkreis 1 bei Stillstand des Brennwertkessels 16 mit Wärmeenergie versorgt werden kann. Dies hat eine praktische Bedeutung in Übergangszeiten, wo der Brennwertkessel 16 noch nicht oberhalb der unteren Modulationsgrenze im Brennwertbereich betrieben werden kann. Andererseits wird in dem Betriebszustand des Brennwertkessels 16 oberhalb der Modulationsgrenze im Dauerbetrieb für die Wärmeversorgung des Verbraucherkreises 1 bewirkt, daß die Temperaturen im Rücklauf 13.1 aus dem Verbraucherkreis 2 durch Einspeisung aus dem Rücklauf 22.1 über eine Vermischung der Rücklaufströme aus dem Rücklauf 13.1 des Verbraucherkreises 2 und aus dem Rücklauf 22.1 des Verbraucherkreises 1 auf Temperaturen zurückgeführt werden, die den wirtschaftlichen Betrieb der Brennwertthermen 3; 4 garantieren.

Diese praktizierbare Ausführungsform zeigt Grenzen, die darin liegen, daß diese Anlagenvariante nicht über einen Druckbereich von P_{N} = 3 eingesetzt werden kann. Die Brennwertthermen 3; 4 sind nicht für höhere Drücke ausgelegt. Für Druckbereiche über P_{N=}3 bietet sich die hydraulische Trennung der beiden Verbraucherkreise 1 und 2 über einen Wärmetauscher 21 an.

Der Vorteil der in zwei Varianten ausgeführten erfinderischen Grundlösung besteht darin, daß grundsätzlich der Einsatz von Brennwertkesseln und Brennwertthermen immer im Brennwerteffekt vollzogen werden kann und der Brennwertkessel 16 im Verbraucherkreis 1 nicht mehr tacktet. Außerdem ist die Wärmeversorgung im Sommer und in den Übergangsperioden über die im Versorgungskreis 2 liegenden Brennwertthermen 3; 4 wirtschaftlich gesichert.

Durch die Verwendung von Brennwertthermen kann eine Leistungsanpassung der erfindungsgemäßen Einrichtung zur Wärmeenergieversorgung von mindestens zwei getrennten Verbtaucherkreisen für Heizungs- und Warmwassererzeugung durch eine beliebige Erweiterung erfolgen, da zu den bereits vorhandenen Brennwertthermen weitere parallel geschaltet und damit nachrüstbar angeordnet werden können.

Mit der erfindungsgemäß ausgebildeten Einrichtung zur Wärmeenergieversorgung wird es ermöglicht, den als Brennwertkessel ausgebildeten Wärmeerzeuger 2 und die Brennwertthermen 3; 4 mit dem vollen Brennwerteffekt, d.h. bei einer definierten niedrigen Rücklauftemperatur zu betreiben. Damit werden Prüfstandswerte der Wärmeerzeuger fast erreicht.

### Aufstellung der Bezugszeichen

- 1: Verbraucherkreis
- 2: Verbraucherkreis
- 3: Brennwerttherme
- 4: Brennwerttherme
- 5: Vorlaufleitung
- 6: Wärmespeicher
- 7: Wärmespeicher
- 8: Wärmetauscher
- 9: Wärmetauscher
- 10: 3-Wegeventil
- 11: Speicherleitung
- 12: Bypaßleitung
- 13.1: Rücklaufleitung
- 13.2: Speicherrücklauf
- 14: Förderpumpe
- 15: Wärmetauscher
- 16: Brennwertkessel
- 17: Vorlauf
- 18: 3-Wegeventil
- 19.1: Vorlaufleitung
- 19.2: Einspeiseleitung
- 20: Wärmetauschervorlauf
- 21: Wärmetauscherrücklauf
- 22: Rücklaufleitung
- 23: Rücklauf
- 24: Rücklauf
- 25: Förderpumpe
- 26: Stellventil
- 27: Rücklaufeinspeisung
- 28: Rücklaufkesseleinspeisung

## Patentansprüche

1. Einrichtung zur Wärmeenergieversorgung mit mindestens zwei auf unterschiedlichen Temperaturebenen liegenden Verbraucherkreisen und mit mindestens einem Wärmeerzeuger, **dadurch gekennzeichnet, daß** die Verbraucherkreise (1; 2) hydraulisch von einander getrennt und über einen Wärmetauscher (21) thermisch miteinander verbunden sind und jeder Verbraucherkreis (1; 2) mit mindestens einem Wärmeerzeuger (3; 4; 16) versehen ist.

2. Einrichtung zur Wärmeenergieversorgung mit mindestens zwei auf unterschiedlichen Temperaturebenen liegendenden Verbraucherkreisen und mitmindestens einem Wärmeerzeuger, **dadurch gekennzeichnet, daß** die Verbraucherkreise (1; 2) entweder rücklaufseitig miteinander verbunden sind, wobei ein Vorlauf (19.2) des einen Verbraucherkreises (1) mit einem Rücklauf (13.1) des anderen Versorgungskreises (2) oder der Rücklauf (13.1) des anderen Versorgungskreises (2) mit einer Rücklaufeinspeisung (27) zu den Wärmeerzeugern (3; 4) über ein Stellventil (26) mit einer Umschaltfunktion regelungstechnisch verbunden sind.

3. Einrichtung zur Wärmeenergieversorgung mit mindestens zwei auf unterschiedlichen Temperaturebenen liegenden Verbraucherkreisen und mit mindestens einem Wärmeerzeuger, **dadurch gekennzeichnet, daß** der Wärmeerzeuger (16) im Verbraucherkreis (1) als Brennwertkessel ausgebildet ist und die Verbraucherkreise (1; 2) entweder rücklaufseitig bei Aufrechterhaltung des Brennwerteffektes im Wärmeerzeuger (16) mit einer Rücklaufkesseleinspeisung (28) in den Wärmeerzeuger (16) in eine zweite, gegenüber einem Rücklauf (22) zum Wärmeerzeuger (16) angehobenen Rücklauftemperaturebene des Wärmeerzeugers (16) oder der Rücklauf (22.1) des Wärmeerzeugers (26) mit der Rücklaufeinspeisung (27) der Wärmeerzeuger (2; 3) über ein Stellventil (26) mit einer Umschaltfunktion regelungstechnisch verbunden ist, wobei die Einspeisung einer definierten Rate in die zweite Rücklaufeinspeisung (28) des Wärmeerzeugers (26) durch eine temperaturabhängig gesteuerte Durchflußmengenregelung erfolgt.

4. Einrichtung nach Anspruch 1 oder 2, **dadurch gekennzeichnet daß** die getrennten Verbraucherkreise (1; 2) mit unterschiedlichen Temperaturebenen für Heizung und für Warmwassererzeugung vorgesehen sind.

5. Einrichtung nach Anspruch 1 oder 2, **dadurch gekennzeichnet daß** die getrennten Verbrauchkreise (1; 2) mindestens mit je einem im Brennwertbereich arbeitenden Wärmeerzeuger (3; 4; 16) ausgerüstet sind.

6. Einrichtung nach Anspruch 1 bis 5, **dadurch gekennzeichnet, daß** von den getrennten Verbraucherkreisen (1; 2) die Wärmeerzeuger (3; 4) des Verbraucherkreises (2) aus im Brennwertbereich arbeitenden Wandthermen und der im Verbraucherkreises (1) eingesetzte Wärmeerzeuger (16) als ein Brennwertkessel ausgebildet ist.

7. Verfahren zum Betreiben einer Einrichtung zur Wärmeenergieversorgung von mit mindestens zwei auf unterschiedlichen Temperaturebenen liegenden Verbraucherkreisen nach Anspruch 1 bis 6, **dadurch gekennzeichnet, daß** zur Gewährleistung des Brennwerteffektes aller Wärmeerzeuger (3; 4; 16) bei geringer Wärmeenergieabnahme im Verbraucherkreis (1) mit einem niedrigeren Temperaturniveau gegenüber dem Verbraucherkreis (2) über die thermische Verbindung der hydraulisch getrennten Verbraucherkreis e(1; 2) oder bei der rücklaufgeregelten Verbindung der Verbraucherkreise (1; 2) eine Versorgung des Verbraucherkreises (1) bis zur unteren Modulationsgrenze des Wärmeerzeugers (16) durch die Wärmeerzeuger (3; 4) des Verbraucherkreises (2) vorgenommen wird.

8. Verfahren nach Anspruch 6, **dadurch gekennzeichnet, daß** die Wärmeversorgung des Verbraucherkreises (1) mittels Rücklaufzuführung aus dem Rücklauf (13.2) des Verbraucherkreises (2) im Bedarf wahlweise bei Stillstand des Wärmeerzeugers (16) in den Vorlauf (19.2) des Verbraucherkreises (1) oder im Betrieb des Wärmeerzeugers (16) in eine Rücklaufkesseleinspeisung (28) oder in eine Rücklaufeinspeisung (27) zu den Wärmeerzeugern (3; 4) erfolgt.

9. Verfahren nach Anspruch 6, **dadurch gekennzeichnet, daß** die Zumischung aus dem Rücklauf (13.1) des Verbraucherkreises (2) in den Vorlauf (10.2) des Verbraucherkreises (1) oder in die Rücklaufkesseleinspeisung (28) oder in die Rücklaufeinspeisung über ein Stellventil (26) mit Umschaltfunktion gesteuert wird.
